Europäisches Patentamt

**European Patent Office**

**Office européen des brevets**

(11) Numéro de publication: **0 244 282**
**B1**

(12) **FASCICULE DE BREVET EUROPEEN**

(45) Date de publication du fascicule du brevet:
**28.06.89**

(21) Numéro de dépôt: **87400780.0**

(22) Date de dépôt: **07.04.87**

(51) Int. Cl.⁴: **B23P 19/00, F28F 11/02**

(54) **Dispositif d'alimentation à distance en pièces de forme cylindrique d'une machine automatique telle qu'une machine de bouchage de tubes d'un générateur de vapeur d'un réacteur nucléaire à eau sous pression.**

(30) Priorité: **30.04.86 FR 8606341**

(43) Date de publication de la demande:
**04.11.87 Bulletin 87/45**

(45) Mention de la délivrance du brevet:
**28.06.89 Bulletin 89/26**

(84) Etats contractants désignés:
**BE CH DE ES GB IT LI SE**

(56) Documents cités:
**US-A- 4 002 265**
**US-A- 4 035 900**

**PATENT ABSTRACTS OF JAPAN,**
**vol. 8, no. 240 (M-336)[1677], 6 novembre 1984**

(73) Titulaire: **FRAMATOME, Tour Fiat 1, Place de la Coupole,**
**F-92400 Courbevoie(FR)**

(72) Inventeur: **Cartry, Jean-Pierre, 117 Cours Gambetta,**
**F-69003 Lyon(FR)**
Inventeur: **Schlaudecker, Denis, 16, rue Cyrano,**
**F-69003 Lyon(FR)**

(74) Mandataire: **Moncheny, Michel et al, c/o Cabinet**
**Lavoix 2 Place d'Estienne d'Orves, F-75441 Paris**
**Cedex 09(FR)**

ACTORUM AG

## Description

L'invention concerne un dispositif d'alimentation à distance en pièces de forme cylindrique d'une machine automatique de pose de ces pièces dans une installation fixe, telle qu'une machine de bouchage des tubes d'un générateur de vapeur d'un réacteur nucléaire à eau sous pression.

Les générateurs de vapeur des réacteurs nucléaires à eau sous pression comportent généralement un faisceau constitué par un très grand nombre de tubes de petit diamètre à l'intérieur desquels circule l'eau sous pression à haute température venant de la cuve du réacteur.

L'eau d'alimentation du générateur de vapeur vient en contact avec la surface externe de ces tubes, si bien que l'échauffement et la vaporisation de l'eau d'alimentation sont assurés par la chaleur de l'eau sous pression qui constitue le fluide caloporteur du réacteur. Les tubes du faisceau sont pliés en U et fixés à chacune de leurs extrémités dans une plaque tubulaire solidaire de l'enveloppe du générateur de vapeur. La distribution et la récupération de l'eau sous pression dans les tubes sont assurées par une boîte à eau en deux parties, de forme généralement hémisphérique, située sous la plaque tubulaire.

Les nombreuses sollicitations auxquelles les tubes du générateur de vapeur sont soumis, par exemple les phénomènes de corrosion sous tension, peuvent entraîner des détériorations des tubes. Lorsqu'un tube est détérioré, il est nécessaire de le mettre rapidement hors service, afin d'éviter que le fluide primaire caloporteur contenant des éléments radio-actifs ne s'échappe de ce tube et ne se mélange avec l'eau d'alimentation constituant le fluide secondaire dont une partie est rejetée sous forme de vapeur dans l'atmos phère. La mise hors service des tubes défectueux est réalisée par bouchage de leurs deux extrémités, au niveau de la plaque tubulaire.

Pour réaliser ce bouchage, on a proposé d'utiliser un outillage manuel assurant l'introduction du bouchon dans le tube et l'expansion de ce bouchon à l'intérieur du tube. Un bouchon constitué par une pièce cylindrique d'un diamètre un peu inférieur au diamètre intérieur du tube et comportant un alésage interne est vissé à l'extrémité de l'outillage qui est ensuite introduit dans le tube à boucher. La commande de l'outillage permet d'exercer grâce à un vérin une force de traction sur une tige assurant l'expansion diamétrale du bouchon à l'intérieur du tube.

L'inconvénient d'un tel procédé est qu'il nécessite la présence d'un opérateur à l'intérieur de la boîte à eau, pour la manipulation de l'outillage manuel. Cet opérateur est donc exposé à un environnement radio-actif, si bien que la durée de son intervention doit être réduite au minimum. Les conditions matérielles et psychologiques de cette intervention sont également défavorables, si bien que, lors de son intervention pendant la durée maximale admise, l'opérateur ne peut effectuer qu'une tâche très partielle.

Lors de l'entretien et de la réparation d'un générateur de vapeur comportant plusieurs tubes défectueux, il est nécessaire de disposer d'une équipe relativement nombreuse d'opérateurs qualifiés et entraînés.

Pour remédier à ces inconvénients et pour faciliter la tâche des opérateurs de maintenance, on a mis au point des machines automatiques permettant de réaliser le bouchage des tubes à distance, la commande et le contrôle de l'opération étant effectués depuis un poste de travail à l'extérieur de la boîte à eau. De telles machines comportant un dispositif de support, de déplacement et de mise en place de l'outillage de bouchage comportent généralement un magasin où sont stockés les bouchons qui présente une forme analogue à celle d'un chargeur pour armes automatiques. Un tel magasin a cependant une capacité réduite, si bien que la durée d'intervention de la machine à l'intérieur de la boîte à eau se trouve limitée.

Le but de l'invention est donc de proposer un dispositif d'alimentation à distance en pièces de forme cylindrique d'une machine automatique de pose de ces pièces dans une installation fixe, telle qu'une machine de bouchage des tubes d'un générateur de vapeur d'un réacteur nucléaire à eau sous pression, cette machine comportant un support relié à l'installation et un outil mobile sur le support, suivant une direction déterminée, pour la prise en charge des pièces cylindriques et leur mise en place dans l'installation, dispositif d'alimentation qui soit très simple et extrêmement fiable et qui permette d'allonger à volonté la durée d'intervention de la machine automatique dans l'installation.

Dans ce but, le dispositif d'alimentation suivant l'invention comporte :

- un boîtier d'alimentation d'une dimension suffisante pour contenir une pièce cylindrique, comportant deux faces opposées pourvues chacune d'une ouverture, l'une de ces ouvertures, ou première ouverture, d'une dimension suffisante pour permettre le passage d'une pièce cylindrique étant munie d'un couvercle amovible traversé par un ajutage relié à un moyen de distribution d'air comprimé et la seconde ouverture étant alignée avec la première,

- un conduit flexible dont le diamètre intérieur est supérieur au diamètre des pièces cylindriques fixé à l'une de ses extrémités au boîtier au niveau de la seconde ouverture,

- et un ensemble de chargement fixé sur le support et constitué :

- d'une partie fixe rigidement solidaire du support et comportant un alésage suivant une direction parallèle à la direction de déplacement de l'outil, dans lequel est fixée la seconde extrémité du conduit flexible,

- et d'un bras rotatif comportant un logement de réception des pièces cylindriques monté articulé sur la partie fixe autour d'un axe parallèle à la direction de déplacement de l'outil et mobile, grâce à un moyen de déplacement, entre une position de réception des pièces cylindriques dans laquelle le logement du bras rotatif est dans le prolongement de l'alésage de la partie fixe et au moins une position de chargement dans laquelle une pièce cylindrique disposée à l'intérieur du logement du bras rotatif peut être prise en charge par l'outil.

Afin de bien faire comprendre l'invention, on va maintenant décrire, à titre d'exemple non limitatif, en se référant aux figures jointes en annexe, un mode particulier de réalisation d'un dispositif d'alimentation suivant l'invention associé à une machine de bouchage des tubes d'un générateur de vapeur d'un réacteur nucléaire à eau sous pression.

Dans ces figures :

- la figure 1 est une vue en perspective de l'outillage de bouchage et du dispositif d'alimentation ;
- la figure 2 est une vue de dessus schématique de la machine de bouchage et du dispositif d'alimentation ;
- la figure 3 est une vue en coupe du boîtier du dispositif d'alimentation ;
- la figure 4 est une vue en coupe verticale de l'ensemble de chargement du dispositif d'alimentation ;
- la figure 5 est une vue en coupe suivant V-V de la figure 4.

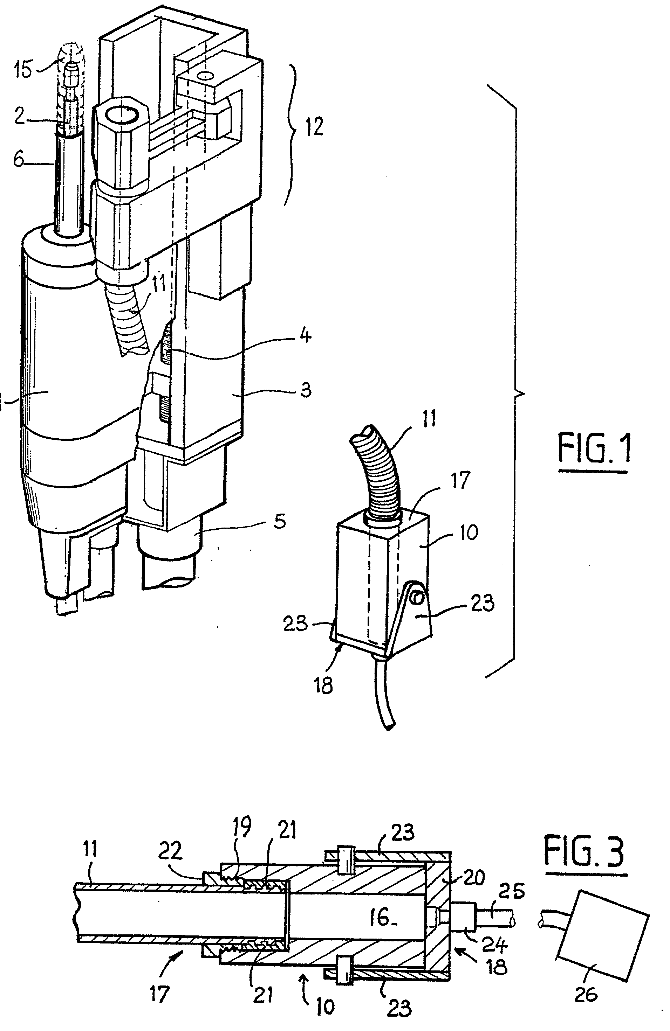

Sur la figure 1, on voit l'outil de bouchage 1 constitué par un vérin dont la tige est prolongée par un mandrin 2 portant à son extrémité le dispositif d'expansion du bouchon. L'outil 1 est monté mobile dans la direction verticale sur un dispositif de déplacement vertical 3 comportant une vis sans fin 4 entraînée par un moteur 5.

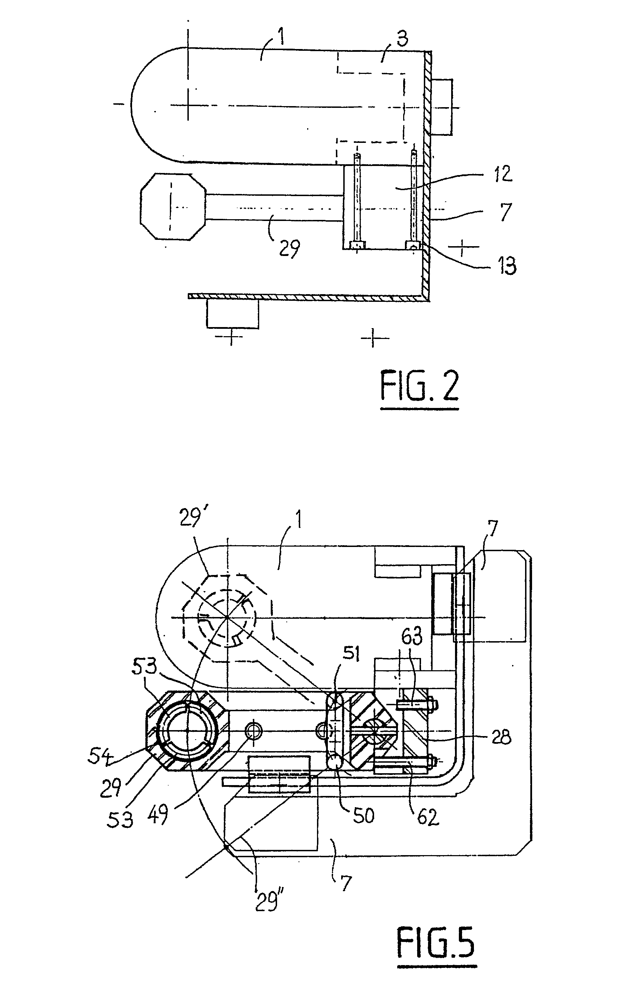

Comme il est visible sur la figure 2, le dispositif 3 permettant la montée et la descente de l'outillage 1 est fixé sur un support 7 permettant de venir placer l'outil en position de travail, à la verticale de chacun des tubes du générateur de vapeur, à l'intérieur de la boîte à eau.

L'outillage de bouchage des tubes, aussi bien que le support mobile à l'intérieur de la boîte à eau, sont bien connus dans la technique antérieure.

Le dispositif de support mobile peut être par exemple du type conçu et développé par la Société FRAMATOME et désigné par les techniciens sous le nom "d'araignée".

De même la machine automatique de bouchage comportant l'outil 1, ses moyens de déplacement 3, 7 et l'ensemble des moyens de commande à distance, de contrôle et de visualisation des opérations de bouchage est bien connue dans la technique antérieure.

Le dispositif d'alimentation à distance associé à cette machine automatique comporte, ainsi qu'il est visible sur les figures 1 et 2, un boîtier d'alimentation 10, un conduit flexible 11 et un ensemble de chargement 12.

Pendant les phases d'utilisation du dispositif sur un générateur de vapeur, le boîtier 10 est à l'extérieur de la boîte à eau du générateur de vapeur, dans une zone non irradiée et est donc accessible pour l'opérateur assurant la conduite de l'opération de bouchage.

L'outillage 1 et son dispositif de déplacement vertical 3 sont portés par le support mobile 7, à l'intérieur de la boîte à eau. L'ensemble de chargement 12 du dispositif d'alimentation est fixé rigidement par des vis 13 sur une des faces externes de la partie de guidage du dispositif 3, lui-même solidaire du support 7.

Le conduit flexible 11 qui est constitué par un tube métallique présentant des ondes facilitant sa déflection permet de joindre le boîtier 10 situé à l'extérieur de la boîte à eau à l'ensemble de chargement 12 situé dans la boîte à eau, sous la plaque tubulaire du générateur de vapeur. Ce tube flexible, d'un type connu dans la technique antérieure, présente une longueur de plusieurs mètres déterminée par la dimension de la boîte à eau et choisie de façon que l'opérateur puisse utiliser le boîtier en un endroit éloigné de la trappe d'accès à la boîte à eau, par laquelle sont introduits l'outillage et son dispositif d'alimentation. Le diamètre intérieur du conduit flexible 11 est sensiblement supérieur au diamètre extérieur du bouchon 15 qui est représenté sur la figure 1 en position vissée à l'extrémité du mandrin 2 de l'outillage 1.

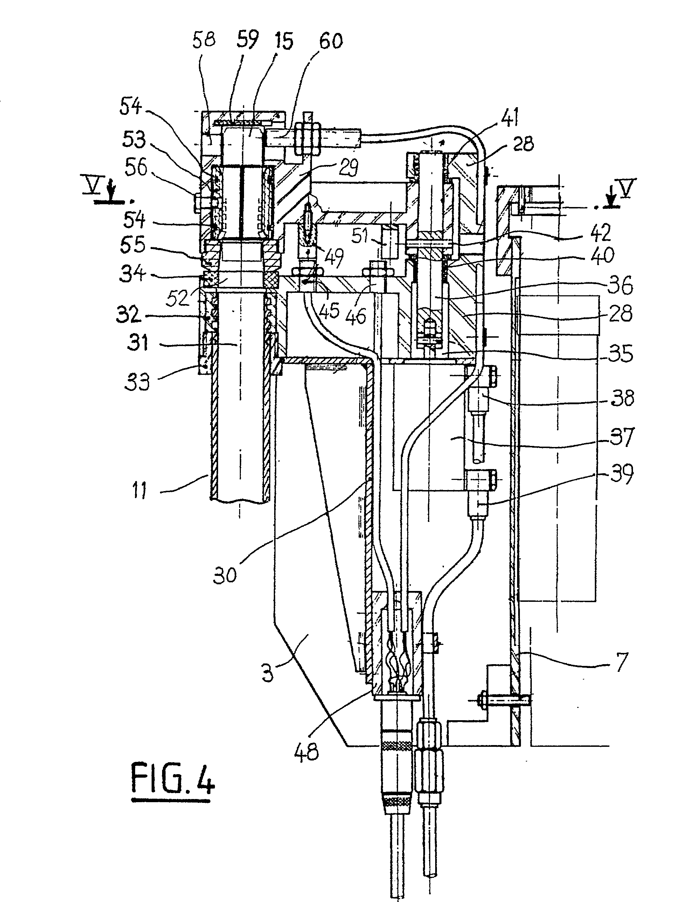

Ainsi qu'il est visible sur les figures 1 et 3, le boîtier d'alimentation 10 de forme parallélépipédique comporte un alésage interne 16 dont le diamètre est sensiblement égal au diamètre intérieur du conduit flexible 11. Le boîtier 10 comporte deux faces opposées 17 et 18 entre lesquelles s'étend l'alésage 16. La face 17 est percée d'une ouverture 19 dans laquelle est engagée l'extrémité du conduit flexible 11. Cette extrémité est maintenue dans le boîtier 10 grâce à deux demi-coquilles 21 et à un écrou 22.

La seconde face 18 du boîtier 10 sur laquelle débouche l'alésage 16 est munie d'un couvercle de fermeture amovible 20 articulé grâce à des bras 23 sur le corps du boîtier. Ce couvercle 20 est traversé par un ajutage 24 relié par l'intermédiaire d'un tube 25 à une source d'air comprimé 26 munie d'un moyen d'arrêt permettant d'envoyer l'air comprimé dans le tube 25 ou d'interrompre le débit d'air dans ce tube.

Sur les figures 4 et 5, on voit l'ensemble de chargement 12 des bouchons qui est constitué d'une partie fixe 28 et d'un bras 29.

La partie fixe 28 est rendue solidaire du dispositif de déplacement 3 et du support 7 par l'intermédiaire d'une équerre de support 30. La partie fixe 28 comporte un alésage 31 vertical, c'est-à-dire dirigé dans la direction de déplacement de l'outil 1. L'extrémité du conduit flexible 11 opposée au boîtier 10 est fixée dans l'alésage 31 grâce à deux demi-coquilles 32 et à un écrou 33. Une bague en caoutchouc 34 est également placée à la sortie de l'alésage 31, légèrement saillante par rapport à la face supérieure de la partie fixe 28. La partie fixe 28 comporte également un alésage 35 d'axe vertical, dans une zone éloignée de l'alésage 31. L'alésage 35 permet le passage d'un arbre vertical 36 relié à l'une de ses extrémités à un vérin pneumatique rotatif 37 alimenté en air comprimé par des canalisations 38 et 39.

L'arbre 36 est monté rotatif dans l'alésage 35 grâce à des paliers 40 et 41.

Le bras rotatif 29 est fixé rigidement sur l'arbre 36 grâce à une goupille 42. Le bras rotatif 29 est ainsi monté rotatif à l'intérieur de la partie fixe 28 entre les deux paliers lisses 40 et 41 constituant des butées pour le bras 29.

Le vérin pneumatique rotatif 37 est monté solidaire de l'équerre de support 30 au niveau d'une ouverture permettant le passage de son axe de sortie, dans le prolongement de l'alésage 35. La partie fixe 28 porte également deux détecteurs de position électromagnétiques 45 et 46 reliés à une boîte de jonction 48 portée par l'équerre de support 30, pour leur alimentation et le recueil des signaux de détection.

Le bras rotatif 29 porte des plots de détection 49, 50 et 51 qui coopèrent avec les détecteurs de position 45 et 46 pour déterminer les positions successives du bras 29.

A son extrémité opposée à l'articulation constituée par l'axe vertical 36, le bras 29 comporte un logement 52 permettant de recevoir un bouchon 15 dans une des positions du bras 29. Ce logement 52 comporte une partie centrale élargie dans laquelle sont disposés trois secteurs cylindriques à 120° 53 maintenus les uns par rapport aux autres par deux joints toriques 54, pour constituer une pince de retenue du bouchon 15 dont le diamètre intérieur est inférieur au diamètre du bouchon, lorsque les secteurs 53 viennent en butée les uns contre les autres, sous l'effet des joints élastiques 54. La pince de retenue constituée par les secteurs cylindriques 53 et maintenue dans le logement 52 par un écrou 55 vissé à l'extrémité de l'alésage constituant le logement 52 dans le bras 29. Une vis 56 permet de maintenir la pince de préhension du bouchon pour l'empêcher de tourner dans le logement 52. La partie supérieure du logement 52 comporte une fenêtre de visualisation 58 permettant de vérifier la présence du bouchon 15 dans le logement 52, grâce à une caméra de télévision. Un détecteur 60 est également monté sur le bras 29 de façon que son palpeur pénètre très légèrement dans le logement 52 et permette de détecter la présence du bouchon 15. Le détecteur 60 est relié au boîtier de connexion 48 pour son alimentation et pour le recueil des signaux de détection.

Le fond supérieur du logement 52 est garni d'une rondelle de caoutchouc 59 permettant d'amortir le choc produit par l'arrivée du bouchon 15 dans la partie supérieure du logement 52.

On va maintenant décrire le fonctionnement du dispositif d'alimentation suivant l'invention, en se référant à l'ensemble des figures.

Nous supposerons qu'à l'instant initial, le mandrin 2 de l'outillage qui vient d'effectuer la mise en place et l'expansion d'un bouchon dans un tube du générateur de vapeur se trouve en position rétractée, c'est-à-dire en position basse, à l'intérieur de l'élément tubulaire 6 (voir figure 1) constituant l'enclume d'appui du bouchon, pendant la phase d'expansion.

L'outillage est alors déplacé, grâce au support mobile dans une nouvelle position de travail à la verticale d'un tube dont on veut effectuer le bouchage.

Le bras 29 du dispositif de chargement se trouve dans sa position représentée sur les figures 1, 2 et 4 qui correspond à la position de ce bras représentée en traits pleins sur la figure 5. Dans cette position, le logement 52 du bouchon à l'intérieur du bras 29 se trouve dans l'alignement de l'alésage 31 de la partie fixe 28 dans lequel est fixée l'extrémité du tube flexible 11. L'alésage 31 et le logement 52 forment une capacité unique, l'écrou d'extrémité 55 du logement 52 venant en appui étanche sur la bague 34 de la partie fixe 28. Le plot 49 du bras 29 est alors exactement à la verticale du détecteur 45 qui envoie un signal de présence du bras dans sa position d'alimentation.

Cette position est contrôlée par l'opérateur, depuis le poste de commande à l'extérieur de la boîte à eau du générateur de vapeur.

L'opérateur peut alors réaliser l'alimentation du bras rotatif en envoyant un bouchon dans le logement 52. Pour cela, l'opérateur ouvre le couvercle 20 du boîtier 10 et introduit un bouchon dans l'alésage 16. Après fermeture du couvercle 20, de l'air comprimé est envoyé dans le boîtier 10 par le tube 25 et l'ajutage 24, ce qui permet de chasser le bouchon 15 dans le flexible 11, puis dans l'alésage 31 et dans le logement 52. Pour pénétrer dans le logement 52, le bouchon 15 écarte les secteurs 53 qui assurent le freinage du bouchon puis sa retenue dans le logement 52. En fin de course, le bouchon vient heurter la rondelle de caoutchouc d'amortissement 59. On peut alors contrôler la présence du bouchon dans le logement 52, par la fenêtre 58, grâce à la caméra et/ou grâce au détecteur de présence 60.

Après que la présence du bouchon ait été contrôlée, on commande la mise en rotation du bras 29 en envoyant de l'air comprimé dans le vérin pneumatique rotatif 37 grâce à la conduite 38. Le bras 29 vient dans sa position 29' (figure 5) dans laquelle le logement 52 contenant le bouchon 15 retenu par les secteurs 53 vient dans une position située exactement à la verticale du mandrin 2 de l'outil 1. Dans cette position, le plot 51 du bras 29 se trouve exactement à l'aplomb du détecteur de position 46 dont le signal indique à l'opérateur la présence du bouchon à la verticale du mandrin de l'outil. On peut alors mettre en rotation le mandrin 2 de l'outil qui se déplace alors vers le haut et vient se visser dans le bouchon 15.

Après vissage complet du mandrin dans le bouchon, on actionne le vérin de l'outil 1 pour déplacer le mandrin 2 vers le bas. Le mandrin 2 entraîne ainsi le bouchon 15 à l'extérieur du logement 52 et le bras 29 est remis dans sa position initiale.

On réalise alors la mise en place et l'expansion du bouchon grâce à l'outil 1, suivant la technique habituelle connue de l'art antérieur.

Le dispositif d'alimentation est alors revenu dans une position permettant l'alimentation du logement 52 pour effectuer un nouveau chargement de l'outil dans une phase ultérieure.

On pourra remarquer que le bras 29 peut venir dans l'une ou l'autre de deux positions de chargement 29' et 29" symétriques par rapport à la position intermédiaire d'alimentation du bras. Le dispositif d'alimentation peut effectuer le chargement de l'outil dans ces deux positions symétriques.

Comme il est visible sur la figure 5, la partie fixe 28 de l'ensemble de chargement comporte des butées arrières 62 et 63 sur lesquelles vient s'appuyer le bras 29 dans sa position d'alimentation et dans sa position de chargement, respectivement. Le positionnement du bras est ainsi assuré de façon précise dans chacune des phases d'utilisation du dispositif d'alimentation.

On voit donc que les principaux avantages du dispositif d'alimentation suivant l'invention sont de permettre d'alimenter l'outil en bouchons d'une façon simple, sûre et rapide depuis l'extérieur de la boîte à eau du générateur de vapeur.

On pourra donc effectuer le bouchage d'un nombre quelconque de tubes, la durée d'intervention de la machine automatique de bouchage n'étant plus limitée par la capacité d'un magasin renfermant une certaine quantité de bouchons.

L'invention ne se limite pas au mode de réalisation qui vient d'être décrit.

On peut imaginer l'utilisation d'un boîtier d'alimentation ou d'un dispositif de chargement de l'outil d'une forme différente de celles qui ont été décrites.

En particulier, on peut imaginer une pince ou autre dispositif de retenue des bouchons dans le logement du bras rotatif réalisée sous une autre forme que celle qui a été décrite et actionnée par exemple par des ressorts ou des moyens pneumatiques ou hydrauliques.

On peut également imaginer l'utilisation de moyens de détection de la positon du bras ou de la présence du bouchon dans le logement de ce bras d'une forme différente de celles qui ont été décrites.

Enfin, le dispositif d'alimentation suivant l'invention peut être utilisé pour fournir des pièces cylindriques différentes de bouchons de fermeture de tubes de générateur de vapeur à une machine automatique, depuis un endroit éloigné de cette machine.

L'invention pourra trouver des applications dans d'autres domaines que le domaine nucléaire et en particulier, dans le domaine de l'industrie chimique et de l'usinage en général, sur des machines avec ou sans enlèvement de copeaux.

## Revendications

1.- Dispositif d'alimentation à distance en pièces de forme cylindrique, d'une machine automatique de pose de ces pièces dans une installation fixe, telle qu'une machine de bouchage des tubes d'un générateur de vapeur d'un réacteur nucléaire à eau sous pression, cette machine comportant un support (7, 3) relié à l'installation et un outil (1) mobile sur le support (7, 3), suivant une direction déterminée, pour la prise en charge des pièces cylindriques (15) et leur mise en place dans l'installation, caractérisé par le fait qu'il comporte :
- un boîtier d'alimentation (10) d'une dimension suffisante pour contenir une pièce cylindrique (15), comportant deux faces opposées (17, 18) pourvues chacune d'une ouverture (19, 16), l'une de ces ouvertures, ou première ouverture (16), d'une dimension suffisante pour permettre le passage d'une pièce cylindrique étant munie d'un couvercle amovible (20) traversé par un ajutage (24) relié à un moyen de distribution d'air comprimé (25, 26) et la seconde ouverture (19) étant alignée avec la première ouverture.
- un conduit flexible (11) dont le diamètre intérieur est supérieur au diamètre des pièces cylindriques (15) fixé à l'une de ses extrémités au boîtier (10) au niveau de la seconde ouverture (19),
- et un ensemble de chargement (12) fixé sur le support (3, 7) et constitué :
- d'une partie fixe (28) rigidement solidaire du support (3, 7) et comportant un alésage (31) suivant une direction parallèle à la direction de déplacement de l'outil (1), dans lequel est fixée la seconde extrémité du conduit flexible (11),
- et d'un bras rotatif (29) comportant un logement (52) de réception des pièces cylindriques (15) monté articulé sur la partie fixe (28) autour d'un axe parallèle à la direction de déplacement de l'outil (1) et mobile, grâce à un moyen de déplacement (37), entre une position de réception des pièces cylindriques (15) où le logement (52) du bras rotatif (29) est dans le prolongement de l'alésage (31) de la partie fixe (28) et au moins une position de chargement dans laquelle une pièce cylindrique (15) disposée à l'intérieur du logement (52) du bras rotatif (29) peut être prise en charge par l'outil (1).

2.- Dispositif d'alimentation suivant la revendication 1, dans le cas où la direction de déplacement de l'outil (1) correspond à la direction verticale, caractérisé par le fait que le logement (52) du bras rotatif (29) renferme une pince de retenue des pièces cylindriques (15) constituée par des secteurs cylindriques (53) maintenus par au moins deux joints toriques élastiques (54) de façon à constituer un cylindre déformable dont le diamètre intérieur est inférieur au diamètre des pièces cylindriques (15).

3.- Dispositif d'alimentation suivant l'une quelconque des revendications 1 et 2, caractérisé par le fait que le moyen de déplacement (37) du bras rotatif (29) est constitué par un vérin pneumatique rotatif.

4.- Dispositif d'alimentation suivant l'une quelconque des revendications 1, 2 et 3, caractérisé par le fait que la partie fixe (28) et le bras rotatif (29) de l'ensemble de chargement (12) comportent des moyens complémentaires (45, 46 - 49, 50, 51) pour détecter la position du bras rotatif (29) par rapport à la partie fixe (28), au support (3, 7) et à l'outil (1).

5.- Dispositif d'alimentation suivant la revendication 4, caractérisé par le fait que les moyens complémentaires (45, 46 - 49, 50, 51) sont constitués par des détecteurs électromagnétiques et des plots métalliques, respectivement.

6.- Dispositif d'alimentation suivant l'une quelconque des revendications 1 à 5, caractérisé par le fait qu'au moins un moyen (60) de détection de la présence d'une pièce cylindrique (15) dans le logement (52) est associé au bras rotatif (29).

7.- Dispositif d'alimentation suivant l'une quelconque des revendications 1 à 6, caractérisé par le fait qu'une bague en matériau élastique (34) est disposée à la sortie et à la partie périphérique de l'alésage (31) de la partie fixe (28) de l'ensemble de chargement, pour assurer la jonction de cet alésage (31) avec le logement (52) du bras rotatif (29), dans la position d'alimentation de ce bras rotatif (29).

8.- Dispositif d'alimentation suivant l'une quelconque des revendications 1 à 7, caractérisé par le fait que le conduit flexible (11) est constitué par un tube métallique présentant des ondes sur toute sa longueur pour faciliter sa déflection.

## Claims

1. A device for the remote feeding of cylindrical members to an automatic machine for placing such members in a fixed installation, such as a machine for plugging the tubes of a steam generator of a pressurized water nuclear reactor, the machine comprising a support (7, 3) connected to the installation in a tool (1) which can move on the support (7, 3) in a predetermined direction to take over the cylindrical members (15) and position them in the installation, characterized in that it comprises:
- a feed housing (10) of a size adequate to contain a cylindrical member (15) and having two opposite faces (17, 18) each formed with an orifice (19, 16), one of the orifices, or the first orifice (16), of a size adequate to allow the passage of a cylindrical member, being equipped with a detachable cover (20) through which a nozzle (24) extends which is connected to a compressed air distributing means (25, 26), the second orifice (19) being aligned with the first orifice;
- a flexible pipe (11) whose internal diameter is larger than the diameter of the cylindrical members (15) and which is attached at one of its ends to the housing (10) in the zone of the second orifice (19);
- and a loaded unit (12) attached to the support (3, 7) and formed by:
    - a fixed portion (28) rigidly connected to the support (3, 7) and comprising a bore (31) which extends in a direction parallel with the direction of movement of the tool (1) and in which the second end of the flexible pipe (11) is fixed;
    - and a rotary arm (29) comprising a receptacle (52) for receiving the cylindrical members (15) which is mounted on the fixed portion (28) so as to be articulated around an axis parallel with the direction of movement of the tool (1) and can be moved, by displacing means (37), between a position for receiving the cylindrical members (15), in which position the receptacle (52) in the rotary arm (29) is in the prolongation of the bore (31) of the fixed portion (28), and at least one loading position, in which a cylindrical member (15) disposed inside the receptacle (52) in the rotary arm (29) can be taken over by the tool (1).

2. A feed device according to claim 1, wherein the direction of movement of the tool (1) corresponds to the vertical direction, characterized in that the receptacle (52) in the rotary arm (29) contains a clamp for retaining the cylindrical members (15) which is formed by cylindrical sectors (53) held by at least two resilient O-rings (54) so as to form a deformable cylinder, whose internal diameter is smaller than the diameter of the cylindrical members (15).

3. A feed device according to claims 1 or 2, characterized in that the means (37) for displacing the rotary arm (29) is formed by a rotary pneumatic jack.

4. A feed device according to any of claims 1, 2 and 3, characterized in that the fixed part (28) and the rotary arm (29) of the loading unit (12) comprise complementary means (45, 46–49, 50, 51) for detecting the position of the rotary arm (29) in relation to the fixed portion (28) of the support (3, 7) and to the tool (1).

5. A feed device according to claim 4, characterized in that the complementary means (45, 46–49, 50, 51) are formed by electromagnetic detectors and metal studs respectively.

6. A feed device according to any of claims 1 to 5, characterized in that at least one means (60) for detecting the presence of a cylindrical member (15) in the receptacle (52) is associated with the rotary arm (29).

7. A feed device according to any of claims 1 to 6, characterized in that a ring (34) made of resilient material is disposed at the outlet of and on the peripheral portion of the bore (31) of the fixed portion (28) of the loading unit, to ensure the connection of this bore (31) with the receptacle (52) in the rotary arm (29) in the feed position of the rotary arm (29).

8. A feed device according to any of claims 1 to 7, characterized in that the flexible pipe (11) is formed by a metal tube having corrugations throughout its length to make it easier for it to bend.

## Patentansprüche

1. Vorrichtung zum Zuführen zylindrisch geformter Teile zu einer automatischen Maschine für das Legen dieser Teile in eine feste Anlage, wie einer Maschine zum Stopfen von Rohren eines Dampfgenerators eines nuklearen Druckwasserreaktors, wobei die Maschine einen Support oder ein Lager (7, 3), welches mit der Anlage verbunden ist, und ein Werkzeug (1) aufweist, welches auf dem Lager (7, 3) gemäß einer vorbestimmten Richtung für die Übernahme der zylindrischen Teile (15) und deren Anordnung in der Anlage bewegbar ist, dadurch gekennzeichnet, daß sie aufweist:
- ein Zuführgehäuse (10) von einer ausreichenden Abmessung, um ein zylindrisches Teil (15) zu enthalten, mit zwei einander gegenüberliegenden Seiten (17, 18), welche jede mit einer Öffnung (19, 16) versehen ist, wobei eine dieser Öffnungen oder erste Öffnung (16) von einer ausreichenden Abmessung ist, um das Passieren eines zylindrischen Teiles zu erlauben, wobei sie mit einem entfernbaren Deckel (20) versehen ist, der von einem Ansatzrohr (24) durchsetzt ist, das mit einer Einrichtung zur Verteilung von komprimierter Luft (25, 26) verbunden ist, und wobei die zweite Öffnung (19) mit der ersten Öffnung fluchtet,
- eine flexible Leitung (11) deren innerer Durchmesser größer ist als der Durchmesser der zylindrischen Teile (15), die an einem ihrer Enden an dem Gehäuse (10) auf der Höhe der zweiten Öffnung (19) befestigt ist,
- und eine Beschickungsanordnung (12), die an dem Lager (3, 7) befestigt ist und gebildet ist aus:
    - einem festen Bereich (28), der starr mit dem Lager (3, 7) verbunden ist und eine Bohrung (31) entlang einer Richtung aufweist, die parallel zur Bewegungsrichtung des Werkzeugs (1) ist, in dem das zweite Ende der flexiblen Leitung (11) befestigt ist,
    - und einem Dreharm (29) der eine Aufnahme oder einen Unterbringungsraum (52) zur Aufnahme der zylindrischen Teile (15) aufweist, der drehbar auf dem festen Bereich (28) um eine Achse ist, die parallel zur Bewegungsrichtung des Werkzeugs (1) verläuft und dank einer Verschiebungseinrichtung (37) zwischen einer Empfangsstellung der zylindrischen Teile (15) bewegbar ist, wo der Unterbringungsraum (52) des Dreharms (29) in der Verlängerung der Bohrung (31) des festen Bereichs (28) ist, und wenigstens einer Beschickungsstellung bewegbar ist, in der ein zylindrisches Teil (15), das im Inneren des Unterbringungsraums (52) des Dreharms (29) angeordnet ist, durch das Werkzeug (1) aufgenommen werden kann.

2. Zuführvorrichtung nach Anspruch 1, in dem Fall wo die Bewegungsrichtung des Werkzeugs (1) der vertikalen Richtung entspricht, dadurch gekennzeichnet, daß der Unterbringungsraum (52) des Dreharms (29) eine Halteklemme der zylindrischen Teile (15) einschließt, die durch zylindrische Sektoren (53) gebildet ist, die durch wenigstens zwei elastische torische Verbindungsstücke (54) derart gehalten sind, um einen deformierbaren Zylinder zu bilden, dessen innerer Durchmesser geringer ist als der Durchmesser der zylindrischen Teile (15).

3. Zuführvorrichtung nach einem der Ansprüche 1 oder 2, dadurch gekennzeichnet, daß die Verschiebungseinrichtung (37) des Dreharms (29) aus einem pneumatischen Drehzylinder gebildet ist.

4. Zuführvorrichtung nach einem der Ansprüche 1, 2 oder 3, dadurch gekennzeichnet, daß der feste Bereich (28) und der Dreharm (29) der Beschickungsanordnung (12) komplementäre Einrichtungen (45, 46–49, 50, 51) aufweisen, um die Position des Dreharms (29) bezüglich des festen Bereichs (28) des Lagers (3, 7) und des Werkzeugs (1) zu erfassen.

5. Zuführvorrichtung nach Anspruch 4, dadurch gekennzeichnet, daß die komplementären Einrichtungen (45, 46–49, 50, 51) durch elektromagnetische Detektoren bzw. Metall- oder Kontaktklötze gebildet sind.

6. Zuführvorrichtung nach einem der Ansprüche 1 bis 5, dadurch gekennzeichnet, daß wenigstens eine Erfassungseinrichtung (60) des Vorhandenseins eines zylindrischen Teils (15) in dem Unterbringungsraum (52) dem Dreharm (29) zugeordnet ist.

7. Zuführvorrichtung nach einem der Ansprüche 1 bis 6, dadurch gekennzeichnet, daß ein Ring (34) aus elastischem Material am Ausgang und am Umfangsbereich der Bohrung (31) des festen Bereichs (28) der Beschickungsanordnung angeordnet ist, um die Verbindung dieser Bohrung (31) mit dem Unterbringungsraum (52) des Dreharms (29) in der Beschickungsposition des Dreharms (29) sicherzustellen.

8. Zuführvorrichtung nach einem der Ansprüche 1 bis 7, dadurch gekennzeichnet, daß die flexible Leitung (11) durch ein Metallrohr gebildet ist, das auf seiner ganzen Länge Wellenform aufweist, um seine Versetzung bzw. Deflektion zu erleichtern.

FIG.1

FIG.3

FIG.2

FIG.5

FIG.4